# EUROPEAN PATENT APPLICATION

(11) **EP 3 085 326 A1**
(43) Date of publication of application: **26.10.2016**
(21) Application number: 15164548.8
(22) Date of filing: 21.04.2015
(51) Int. Cl.: A61C 7/00, A61C 7/08, A61C 7/12

(54) **BRACES TO ALIGNER TRANSITION IN ORTHODONTIC TREATMENT**

(71) Applicant: Ormco Corporation, Orange, CA 92867 (US)
(72) Inventor: HUANG, Stanley S, Irvine, CA 92603 (US); ANDREIKO, Craig, Deceased (US); KITCHING, Ian, Rancho Cucamonga, CA 91739 (US)
(74) Representative: Findlay, Alice Rosemary

(57) **Abstract**

Braces placed on teeth are retained, until a predetermined criteria is satisfied. A plurality of aligners are ordered while retaining the braces on the teeth, in response to the predetermined criteria being satisfied. The braces are replaced with a first aligner of the plurality of aligners.

## Description

The disclosure relates to a method, system, and computer readable storage medium for braces to aligner transition in orthodontic treatment.

Orthodontics is a specialty of dentistry that is concerned with improvement of the general appearance of a patient's teeth and also the correction of malocclusions, crookedness and other flaws of the teeth. Orthodontic braces are devices that are placed on a patient's teeth by a dental practitioner. In an orthodontic brace, wires interact with brackets to move teeth to a desired position. Often, such orthodontic braces are periodically adjusted by the dental practitioner to help align and straighten the teeth. Treatment by the dental practitioner may help in repositioning the teeth to correct flaws and improve the general appearance of the patient.

Another method of orthodontic treatment may use a series of clear, removable teeth aligners as an alternative to orthodontic braces. A series of aligners are successively worn by the patient to reposition the teeth to correct flows.

US patent 7,074,038 describes a mechanism for integrating braces with aligners for orthodontic treatment. In US patent 7,074,038, in situations where severe malocclusion is indicated in the patient, braces are used in combination with aligners. In situations where severe malocclusion is not indicated in the patient, aligners are used. According to US patent 7,074,038 severe malocclusion is indicated in the following situations: A-P correction of greater than 2 mm; Autorotation of the mandible required for vertical/A-P correction; CR-CO discrepancy correction/treatment to other than centric occlusion; Correction of moderate to severe rotations of premolars and/or canines that are greater than 20 degrees; Severe deep bite opened to ideal or open bite to be closed to ideal; Extrusion of teeth greater than 1 mm other than as part of torquing or in conjunction with intrading adjacent teeth; Teeth tipped by more than 45 degrees; Multiple missing teeth; Crowns less than 70% of normal size; Posterior open bite; and Movement of entire arch required for A-P correction.

In orthodontics, there are two major appliance types: braces and aligners. Aligners offer patients the aesthetics that they desire, and more comfort than braces. Aligners also allow the dental practitioner to finish the cases with much more ease because aligners do not require the dental practitioners to bend wires or reposition brackets. However, the weakness of aligners is that they cannot handle all cases. There are limits to the effectiveness of the aligner in correcting malocclusions.

Brackets and wires of braces can handle cases that aligners cannot handle. However, finishing with brackets may more difficult. In addition, brackets are not as comfortable or aesthetically pleasing as aligners.

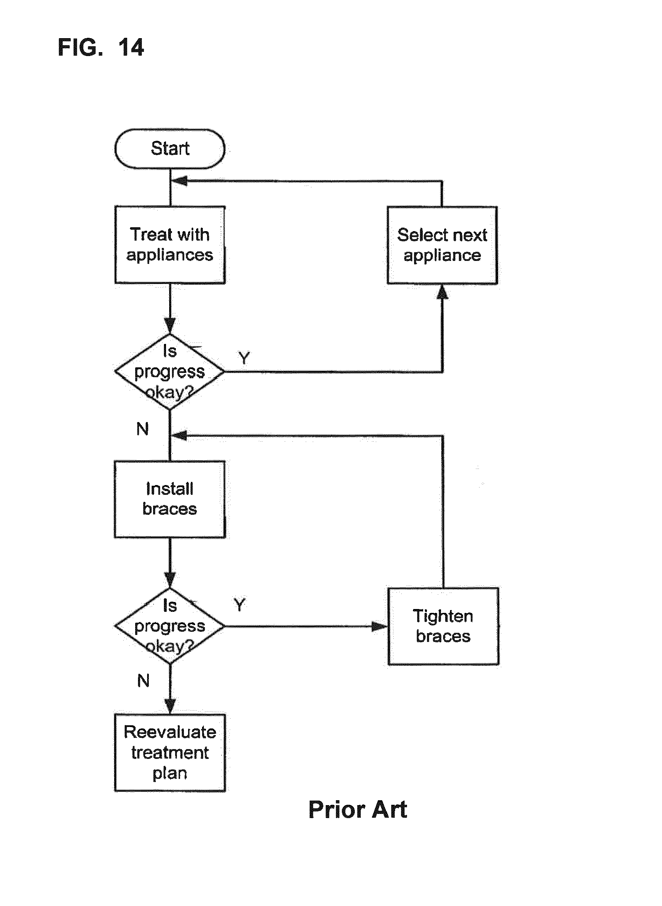

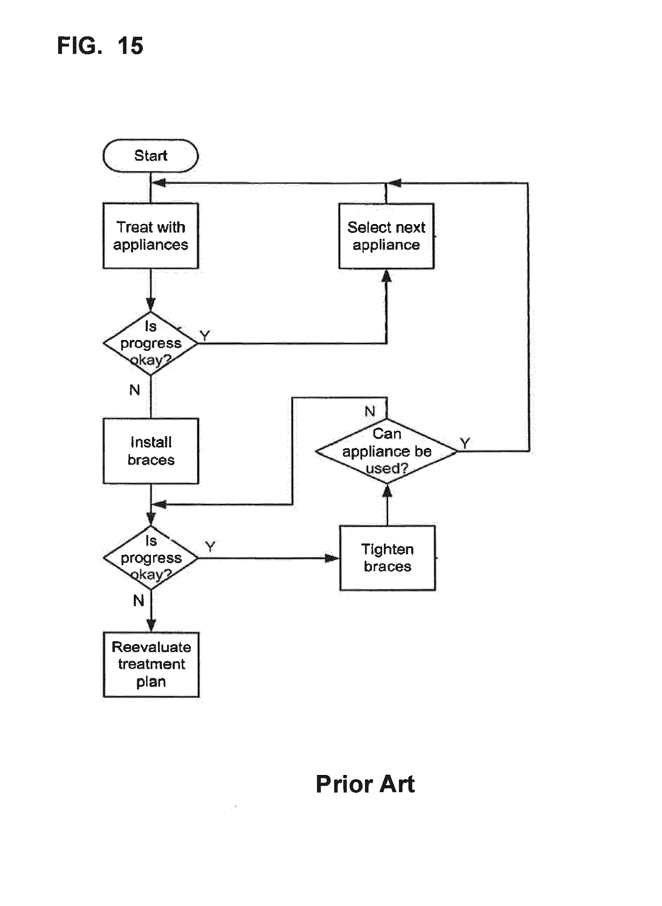

While US patent 7,074,038 describes a mechanism for integrating braces with aligners, US patent 7,074,038 describes (as shown in Prior Art FIGS. 14, 15 which are equivalent to figures eight and nine of US patent 7,074,038 respectively) that braces are used after aligners. Since US patent 7.074,038 describes that braces are used after aligners, US patent 7,074,038 has serious deficiencies.

In one aspect there is provided a system in which braces placed on teeth are retained, until a predetermined criteria is satisfied. A plurality of aligners are ordered while retaining the braces on the teeth, in response to the predetermined criteria being satisfied. The braces are replaced with a first aligner of the plurality of aligners.

In certain embodiments, the predetermined criteria is satisfied when there are no collisions in the teeth.

In further embodiments, the predetermined criteria is satisfied when no active attachments are needed on the plurality of aligners to be ordered.

In yet further embodiments, the predetermined criteria is satisfied when a numerical quantity of the plurality of aligners that are needed is less than a threshold.

In additional embodiments, the predetermined criteria is satisfied when wires are reasonably passive.

In certain embodiments, the predetermined criteria is satisfied when: there are no collisions in the teeth; no active attachments are needed on the plurality of aligners to be ordered; a numerical quantity of the plurality of aligners that are needed is less than a threshold; and wires are reasonably passive.

In further embodiments, the first aligner has a relaxed fit with respect to the teeth and is a retentive aligner, and movement of the teeth is restricted via the braces, between the ordering and receiving of the plurality of aligners.

In yet further embodiments, the retentive aligner is fabricated from a material that is more flexible in comparison to programmed aligners of the plurality of aligners.

In still further embodiments, the retentive aligner is fabricated from a material that is thinner in comparison to programmed aligners of the plurality of aligners.

In certain embodiments, to determine whether the predetermined criteria is satisfied, one or more of a heat and bite operation and a scanning operation is performed.

In further embodiments, the plurality of received aligners include one or more retentive aligners with different amounts fit with respect to the teeth, wherein a retentive aligner that fits the teeth most tightly is placed on the teeth to bring the teeth back to a position and orientation at which the plurality of aligners were ordered.

In yet further embodiments, prior to replacing the braces with the first aligner, a truncated aligner is fitted to the teeth with the braces not removed from the teeth, to determine whether the first aligner can be fitted to the teeth after removal of the braces.

In certain embodiments, the braces are lingual braces.

In further embodiments, the braces are replaced with the first aligner in an upper arch.

In yet further embodiments, the braces are replaced with one aligner in an upper arch and at least another aligner in a lower arch.

Provided also is a method of manufacturing a plurality of aligners for a patient, wherein the patient has already been treated with braces placed on teeth. The method of manufacturing comprises receiving an order for the plurality of aligners, wherein the order for the plurality of aligners is received while retaining the braces placed on the teeth, and wherein the order is received after a predetermined criteria is satisfied. In response to receiving the order, the plurality of aligners are manufactured, wherein the braces are replaced with a first aligner of the plurality of aligners.

Provided also is a system in which brackets and wires are placed on teeth, and an aligner with indentations are placed on the teeth, wherein the brackets and wires fit into the indentations.

In further embodiments, the wires are configured to move the teeth via adjustments, and the aligner is configured to move the teeth.

In yet further embodiments, movement of the teeth obtained by adjustment of the wires is greater than the movement of the teeth achieved by a sequence of aligners.

Provided further is a system in which an aligner is placed on an upper dental arch of a patient, and braces are placed on a lower dental arch of the patient, wherein the aligner and the braces are used to adjust position and orientation of teeth included in the upper dental arch and lower dental arch of the patient.

Provided further are a method, system, and computer readable storage medium for designing braces and aligners. A computational device uses digital images of teeth to design the braces, wherein the braces are retained until a predetermined criteria is satisfied. Based on additional digital images of the teeth, the plurality of aligners are designed, wherein the braces are replaced with a first aligner of the plurality of aligners.

Provided further are plurality of aligners for teeth, wherein the plurality of aligners comprise a first aligner that has a relaxed fit with respect to the teeth and is a retentive aligner, and programmed aligners that are different from the first aligner. In certain embodiments, the retentive aligner is fabricated from a material that is more flexible in comparison to the programmed aligners of the plurality of aligners. In further embodiments, the retentive aligner is fabricated from a material that is thinner in comparison to the programmed aligners of the plurality of aligners.

The invention will now be further described by way of example with reference to the accompanying drawings, in which:
FIG. 1 illustrates a block diagram of a computing, manufacturing, and usage environment for placing braces and aligners on a patient's teeth, in accordance with certain embodiments;
FIG. 2 illustrates a flowchart that shows operations to order aligners for a patient, in accordance with certain embodiments;
FIG. 3 illustrates a flowchart that shows operations performed after securing the ordered aligners for a patient, in accordance with certain embodiments;
FIG. 4 illustrates a block diagram that indicates a set of predetermined criteria for transitioning from braces to aligners, in accordance with certain embodiments;
FIG. 5 illustrates a flowchart that shows movements occurring in teeth during the period in which a patient with braces is awaiting the ordered aligners to arrive, in accordance with certain embodiments;
FIG. 6 illustrates block diagram that shows how aligners with a relaxed fit are placed on the teeth after removal of braces and prior to placing programmatic aligners, in accordance with certain embodiments;
FIG. 7 illustrates a block diagram that shows truncated aligners that may be fitted over teeth with braces, in accordance with certain embodiments;
FIG. 8 illustrates a flowchart that shows how truncated aligners are used for determining whether a plurality of aligners are likely to fit a patient's teeth, in accordance with certain embodiments;
FIG. 9 illustrates a flowchart that shows certain operations, in accordance with certain embodiments;
FIG. 10 illustrates a block diagram that shows how aligners may be placed on the upper arch of a patient and braces on the lower arch, in accordance with certain embodiments;
FIG. 11 illustrates a block diagram that shows an aligner with indentations that fits over braces placed on teeth, in accordance with certain embodiments;
FIG. 12 illustrates a block diagram that shows how a patient may perform heat and bite operations at home, in accordance with certain embodiments; and
FIG. 13 illustrates a block diagram of a computer system that is used to design braces and aligners, in accordance with certain embodiments;
FIG. 14 illustrates a prior art process for integrating aligner with braces; and
FIG. 15 illustrates another prior art process for integrating aligner with braces.

### Addressing Problems of Integrating Aligners with Braces

While it has been known for many years that braces and aligners may be used in succession for orthodontic treatment, with braces being used for correcting severe malocclusion followed by orthodontic treatment with aligners, such a course of action is not commonly used on patients by dental practitioners. Other than determining severe malocclusion discussed in US patent 7,074,038, there are factors currently not known in the art that may severely impact the integration of braces and aligners and make the integration of braces and aligners discussed in US patent 7,074,038 impractical. Also US patent 7,074,038 shows that braces are used after aligners and such implementations are undesirable and likely to lead to inferior results in orthodontics. It appears that US patent 7.074,038 may be suggesting that if treatment with aligners is unsuccessful then braces are used. Therefore, in prior art the integration of aligners to braces for successful treatment in orthodontics is not clear. Braces are suited for causing relatively large movements to teeth and aligners are suited for providing finishing touches. By using aligners before braces, it is apparent that in prior art proper mechanisms to integrate braces and aligners for suitable orthodontic treatment of a patient is unknown or incorrectly implemented. In contrast, certain embodiments provided by the current disclosure describe how a transition from braces to aligners is made for orthodontic treatment of patient, such that braces are used first and finishing is then provided by aligners.

If braces are first used on a patient for correcting severe malocclusion and then aligners are ordered, then during the period in which the aligners are being fabricated, the teeth that have braces on them may still undergo some small movements, and the newly ordered aligners may not fit when they arrive at the dentist's office.

Additionally, there are other factors besides correcting severe malocclusion that may be considered while transitioning from braces to aligners. For example, certain embodiments may remove collisions before moving from braces to aligners, and additionally use the following factors to determine the transition from braces to aligners based on at least the following factors:
(a) When active attachments are needed for aligner for moving teeth, should the transition be made;
(b) Whether more than a threshold number of aligners are needed; and
(c) Whether any in-office wire bending is still needed on the braces.

Certain embodiments provide a mechanism to provide a transition from braces to aligners for orthodontic treatment of patients based on removing collisions before moving from braces to aligners, determining that active attachments are not needed for moving teeth via aligners, determining the number of aligners needed, and determining whether or not in-office wire bending is needed for orthodontic treatment.

Certain embodiments, also order aligners in which the first few aligners of the sequence of aligners are retentive aligners with a relatively relaxed fit on the teeth. As a result, even if slight movements of the teeth have taken place while waiting for the aligners to arrive, such relaxed fit retentive aligners can still fit on the teeth, to bring the teeth back to the position at which the sequence of aligners were ordered. The relaxed fit aligners may be made from a more flexible material or from a thinner material in comparison to other aligners.

Certain embodiments provide aligners with indentations that can fit over lingual or labial braces. Certain embodiments use aligners in the upper arch and braces in the lower arch.

### Exemplary embodiments

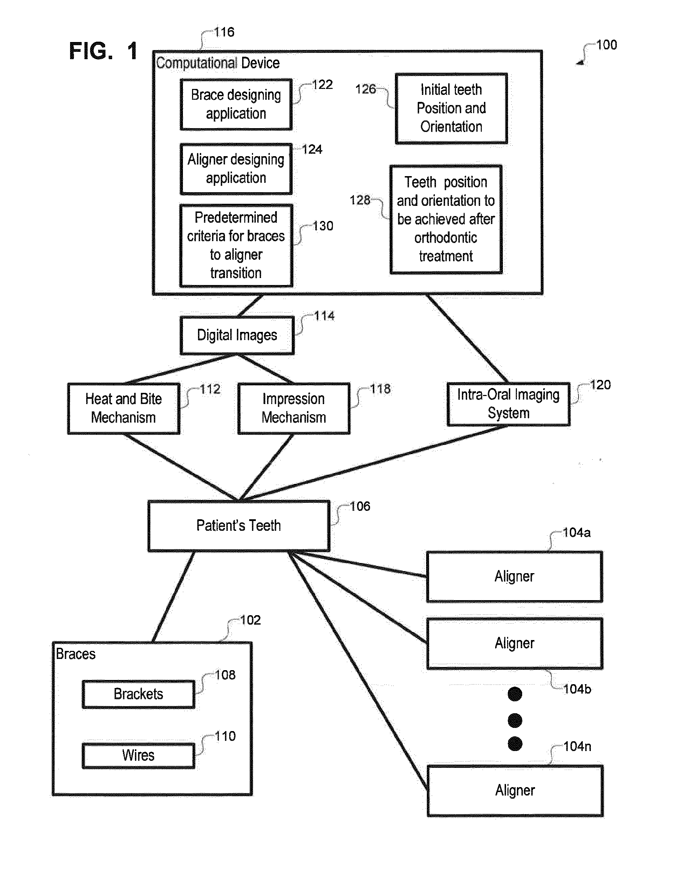

FIG. 1 illustrates a block diagram of a computing, manufacturing, and usage environment 100 for placing braces and aligners on a patient's teeth, in accordance with certain embodiments.

A dental practitioner may place braces 102 or aligners 104, 104b,...104n on a patient's teeth 106. The braces 102 may be comprised of brackets 108 and wires 110, where the wires 110 may also be referred to as archwires. A dental practitioner may periodically adjust the wires 110 and this may over a course of time move the patient's teeth 106 to a desired position and orientation. The dental practitioner may also place the sequence of aligners 104a...104n, one after another, to move the patient's teeth 106 to a desired position and orientation.

In certain embodiments, a heat and bite mechanism 112 may be used on the patient's teeth 106. In the heat and bite mechanism 112 a patient bites into a shape set polymer to generate an impression of the patient's teeth. Digital images 114 corresponding to the heat and bite impression may be generated, for being processed by a computational device 116. In certain alternative embodiments an impression mechanism 118 may be used on the patient's teeth 106 and digital images 114 corresponding to the impressions obtained via the impression mechanism 118 may be generated for processing by the computational device 116.

In additional embodiments, an intra-oral imaging system 120 may be used to acquire images of the patient's teeth 106 for being processed by the computational device 116.

The computational device 116 may include a brace designing application 122 and an aligner designing application 124. The brace designing application 122 may be used for designing the braces 102 that are placed on the patient's teeth 106, whereas the aligner designing application 124 may be used to design the aligners 104a...104n that are fitted to the patient's teeth 106.

The computation device 116 stores digital images or models corresponding to an initial teeth position and orientation 126. The computational device 116 also stores digital images or models corresponding to the teeth position and orientation to be achieved after orthodontic treatment 128. The brace designing application 122 may generate a design for brackets 108 and wires 110 to be placed on a patient's teeth 106 based on the initial teeth position and orientation 126 and the desired teeth position and orientation 128. The aligner designing application 124 may generate a design for the sequence of aligners 104a...104n to be placed on a patient's teeth 106 based on the initial teeth position and orientation 126 and the desired teeth position and orientation 128. A manufacturer may manufacture braces 102 and aligners 104a...104n in accordance with designs generated by the brace designing application 122 and the aligner designing application 124.

In certain embodiments, a dental practitioner may first place braces 102 on the patient's teeth 106. After certain predetermined conditions for braces to aligner transition 130 have been satisfied, the dental practitioner may order a set of aligners 104a...104n and then remove the braces 102 and begin a course of orthodontic treatment with the sequence of aligners 104a...104n, until the desired teeth position and orientation 128 is achieved for the patient's teeth 106.

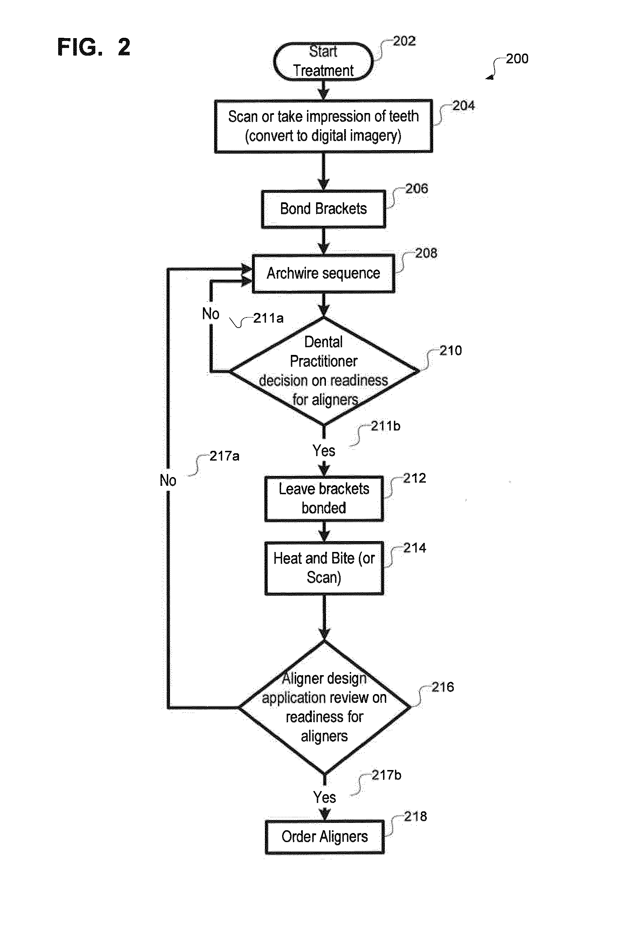

FIG. 2 illustrates a flowchart 200 that shows operations to order aligners for a patient, in accordance with certain embodiments. In certain embodiments, the operations shown in FIG. 2 may be performed by a dental practitioner with the assistance of the computational device 116 and other devices such as the heat and bite mechanism 112, the impression mechanism 118, or the intra-oral imaging system 120.

Control starts at block 202 in which the dental practitioner starts a course of treatment on the patient's teeth 106, with an objective to change the position and orientation of the patient's teeth 106 to improve the aesthetics of the patient's teeth 106. Control proceeds to block 204 in which the dental practitioner acquires a digital scan of the patient's teeth 106 via an intra-oral imaging system 120 or acquires an impression of the patient's teeth 106 via an impression mechanism 118 and the impression is converted to digital images 114.

The digital scan of the intra-oral imagery 120 or the digital images 114 corresponding to the impression mechanism 118 may be analyzed via the brace designing application 122 to create data structures corresponding to the initial teeth position and orientation 126 and the desired teeth position and orientation 128 to be achieved after orthodontic treatment. Based on the initial teeth position and the orientation 126 and the desired teeth position and orientation 128, the brace designing application 122 may design braces 102 that are appropriate for moving the patient's teeth 106. The braces 102 are manufactured and sent to the dental practitioner, and the dental practitioner bonds (at block 206) the brackets 108 to the patient's teeth and attaches wires 110 that are referred to as archwires. The archwires 110 are periodically adjusted by the dental practitioner in block 208, and the dental practitioner determines (at block 210) whether the patient is ready for aligners. If not ("No" branch 211 a) control returns to block 208 where the archwires are adjusted once again. If so, ("Yes" branch 211 b) control proceeds to block 212 where the brackets 108 are left bonded and the wires 110 are left in position. A heat and bite mechanism 112 is used to acquire (at block 214) an impression of the patient's teeth 106 with the braces 102 still on the patient's teeth 106 and corresponding digital images 114 may be generated for use in the computational device 116. In alterative embodiments, the intra-oral imaging system 120 may be used to scan the patient's teeth 106 on which braces 102 are still present, and the corresponding digital images may be sent to the computational device 116.

Control proceeds to block 216 in which the aligner designing application 124 reviews the position of the teeth after treatment via braces 102 and determines based on the predetermined criteria 130 whether the patient's teeth 106 are in a current position and orientation where they are suitable for treatments via aligners to make the teeth reach the desired position and orientation 128. If not ("No" branch 217a), control returns to block 208 and the archwires 110 are adjusted once again by the dental practitioner. If so ("Yes" branch 217b), then the dental practitioner orders (at block 218) a set of aligners 104a...104n designed by the aligner designing application 124 and waits for the set of aligners 104a...104n to arrive while the braces 102 are still on the patient's teeth 106.

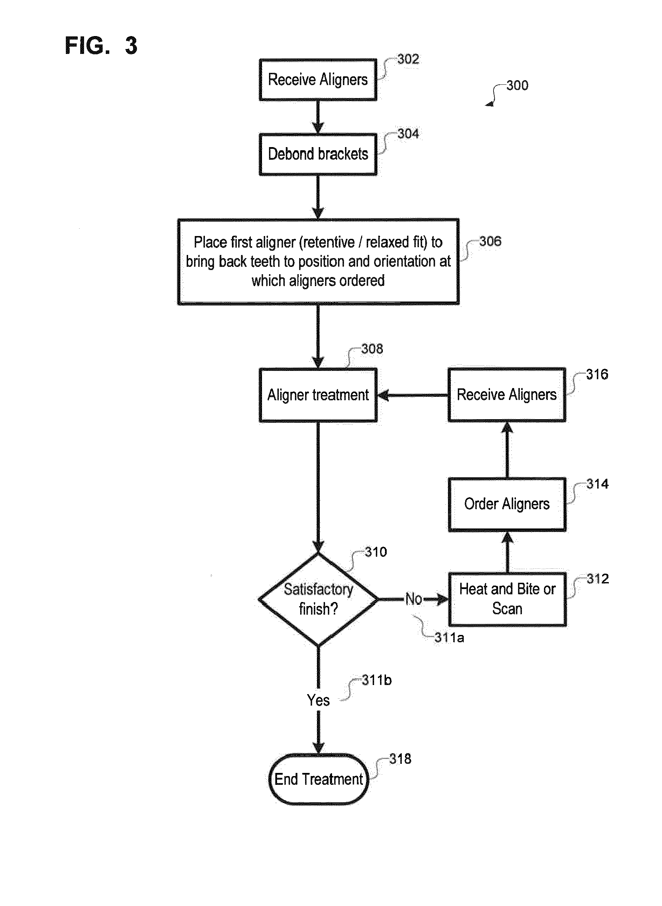

FIG. 3 illustrates a flowchart 300 that shows operations performed after securing the ordered aligners for a patient, in accordance with certain embodiments. In certain embodiments, the operations shown in FIG. 3 may be performed by a dental practitioner with the assistance of the computational device 106 and other devices such as the heat and bite mechanism 112, the impression mechanism 118, or the intra-oral imaging system 120.

Control starts at block 302 in which the dental practitioner receives the aligners 104a...104n. On receiving the aligners 104a...104n, the dental practitioner debonds (at block 304) the brackets 108 from the patient's teeth 106 and removes the archwires 110 (i.e., the braces 102 are removed), and starts the course of treatment with aligners by placing (block 306) the first aligner 104a which is a retentive aligner to bring back the patient's teeth to the position and orientation at which the patient's teeth were at the instant of time at which the aligners were ordered in block 218. The retentive aligner 104a may fit loosely (i.e., have a relaxed fit) on the patient's teeth 106 such that the course of treatment with aligners may begin. In the course of aligner treatment (shown via block 308) the sequence of aligners 104a,....104n are placed on the patient's teeth 106 one after the other to move the patient's teeth.

Once aligner treatment 308 with the set of aligners 104a...104n has concluded, a determination (at block 310) is made as to whether a satisfactory finish has been obtained on the patient's teeth, i.e., the teeth have move to the desired position and orientation 128 and the result is aesthetically pleasing. If not, ("No" branch 311a) control proceeds to block 312 where a heat and bite or scan of the patient's teeth is taken and new aligners ordered (at block 314) based on the current position and orientation of the teeth and the desired position and orientation. The aligners are received (at block 316) and the aligner treatment starts (at block 308) once again.

At block 310, if a satisfactory finish on the patient's teeth is obtained ("Yes branch 311 b) control proceeds to block 318 where the orthodontic treatment of the patient may end.

Therefore, FIG. 3 illustrates certain embodiments in which the braces 102 are removed after the aligners 104a..104n arrive, and the aligner treatment is continued till the teeth are in the desired position 128.

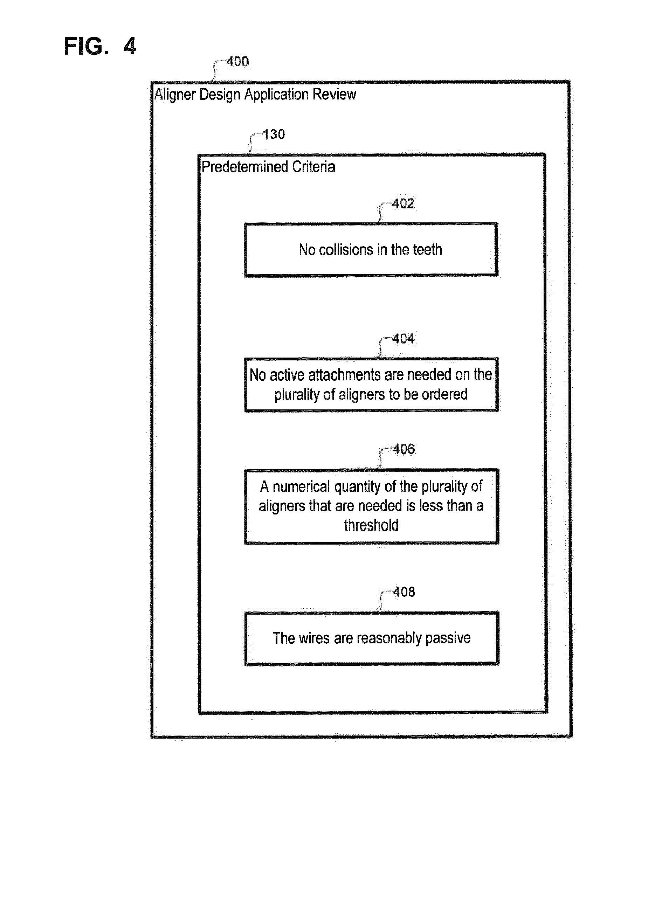

FIG. 4 illustrates a block diagram 400 that indicates the set of predetermined criteria 130 for transitioning from braces to aligners, in accordance with certain embodiments. The set of predetermined criteria 130 is satisfied when: there are no collisions in the teeth (block 402), no active attachments are needed on the plurality of aligners to be ordered (block 404), a numerical quantity of the plurality of aligners that are needed is less than a threshold (block 406), and the wires are reasonably passive (block 408). In certain embodiments, a dental practitioner may assign the threshold, and different dental practitioners may use different thresholds. In certain embodiments, the threshold is less than 10. The transitioning from braces to aligner mechanism via the predetermined criteria may be implemented via software.

A collision of teeth may be said to occur when there is not enough space between two teeth to allow a tooth to move in between the two teeth. A active attachment is an attachment that allows programmatic aligners that move teeth to be placed on the patient's teeth, whereas a passive attachment may be attachments that allow retentive aligners that retain teeth in position (i.e., the movement of the teeth is minimal as compared to programmatic aligners).

If the number of aligners needed to adjustment of teeth exceed a certain threshold number, then the time taken for aligner treatment is significant and faster and/or better results may be obtained by continuing with treatment with braces 102 prior to starting aligner treatment.

Additionally, if the wires 110 are passive (i.e., they are not applying forces on the teeth, and do not move teeth but are just for retaining the teeth in position) then another condition for treatment with braces 102 may have been satisfied.

In certain embodiments, the various factors 402, 404, 406, 408 may be provided with different weightings and a composite score determined to conclude whether or not to begin treatment with aligners. For example, certain embodiments may begin treatment with aligners if three of the four predetermined criteria 402, 404, 404, 408 are satisfied. In other embodiments, if there are minor collisions in the teeth but the other criteria 404, 406, 408 are satisfied then treatment with aligners may begin. In yet other embodiments, treatment with aligners may begin when one or more of the conditions 404, 404, 406, 408 are satisfied.

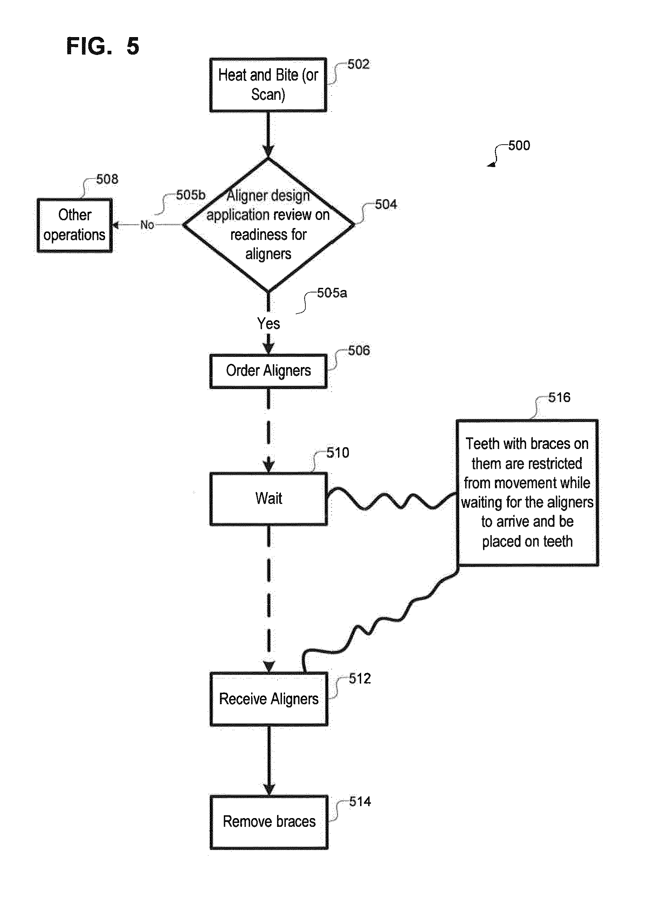

FIG. 5 illustrates a flowchart 500 that shows movements occurring in teeth during the period in which a patient with braces is waiting for the ordered aligners to arrive, in accordance with certain embodiments.

Control starts at block 502 when a heat and bite or scan of the patient's teeth 106 has been taken with the braces still placed on the patient's teeth and the aligner design application 124 performs an review on readiness for aligners (at block 504), and if the predetermined criteria for braces to aligner transition 130 are satisfied ("Yes" branch 505a), then the aligners are ordered (at block 506), and otherwise ("No" branch 505b) other operations (block 508) are performed.

After ordering aligners (at block 506) the patient is made to wait (at block 510) for the aligners to arrive after being manufactured. During the waiting time 510 prior to the receipt of the aligners (block 512) and prior to the removal of the braces (block 514) the teeth with braces on them are restricted from substantial movement (at block 516). Thus virtually no movements in teeth with braces occur while waiting for the aligners to arrive and before being placed on teeth after removal of the braces (at block 514).

If the teeth with braces may move a small amount while waiting for the aligners, in certain alternative embodiments the aligner designer application 124 takes this small amount of potential movement into account while designing the aligners 104a...104n.

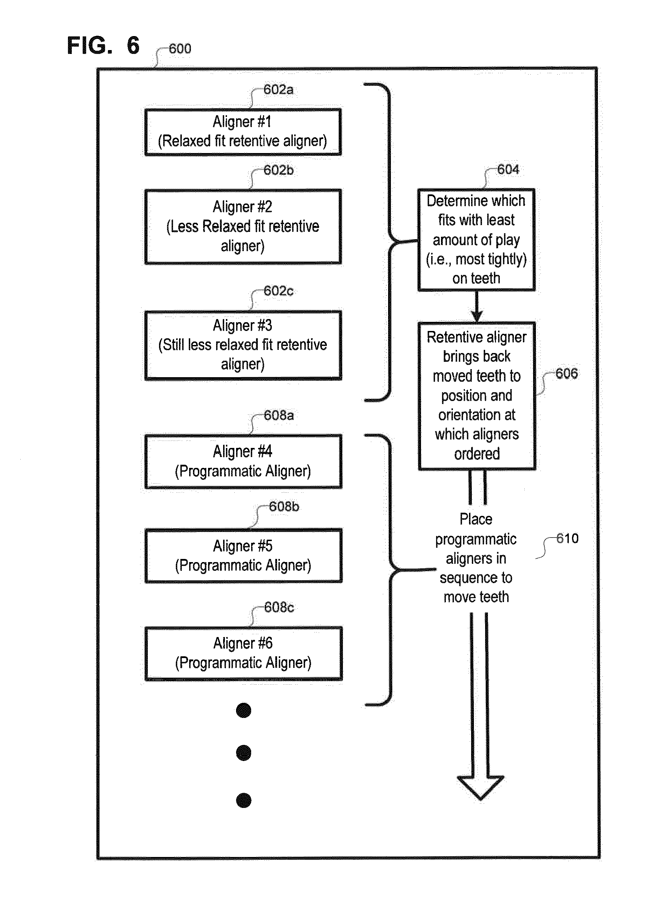

FIG. 6 illustrates block diagram 600 that shows how aligners with a relaxed fit are placed on the teeth after removal of braces and prior to placing programmatic aligners, in accordance with certain embodiments.

The first aligner 602a of the sequence of aligners may be manufactured as a relaxed fit retentive aligner. The second aligner 602b of the sequence of aligners may be manufactured as a less relaxed fit retentive aligner. The third aligner 602c of the sequence of aligners may be manufactured as a still less relaxed fit retentive aligner. The dental practitioner may determine which of the aligners 602a, 602b, 602c fits with least amount of play (i.e., most tightly) on the patient's teeth 106 and begins the treatment with aligners with that aligner (at block 604). The retentive aligners bring back the teeth to the position and orientation at which the aligners were ordered (at block 606). Then the programmatic aligners 608a, 608b, 608c, etc., are placed in succession (at block 610) on the teeth 106 to move the teeth to the desired teeth position and orientation 128.

Therefore, FIG. 6 illustrates certain embodiments, in which first retentive aligners that are relaxed are used prior to using programmatic aligners to move teeth to the desired final position 128. The relaxed retentive aligners may be fabricated from a thinner or more flexible material when compared to the programmatic aligners. The relaxed retentive aligners fit easily on the teeth and reduces the likelihood of aligners being returned for not fitting on teeth.

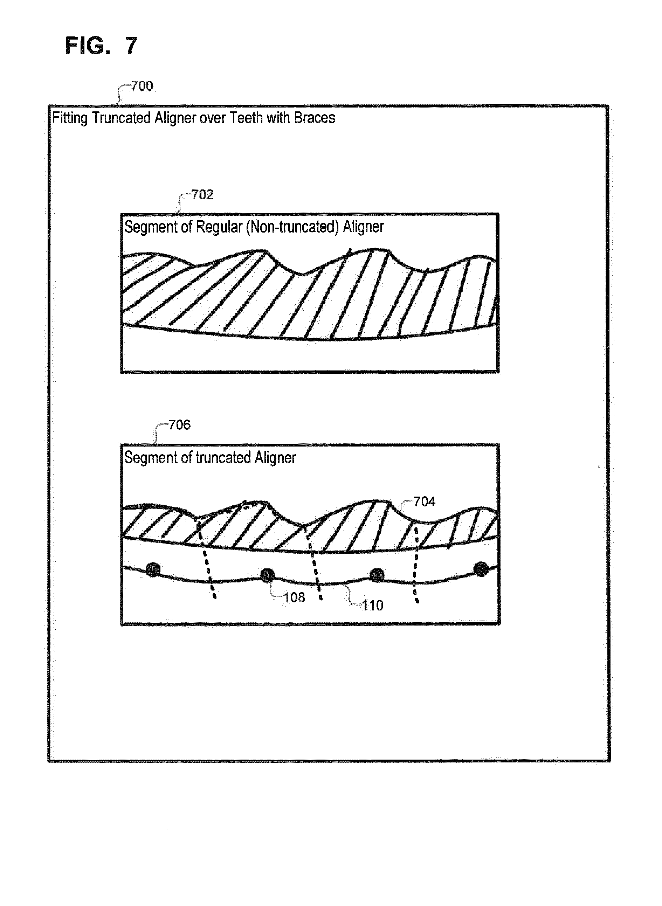

FIG. 7 illustrates a block diagram 700 that shows truncated aligners that may be fitted over teeth with braces, in accordance with certain embodiments.

It may be noted that once the braces 102 are removed to fit aligners, if the aligners do not fit then aligners may have to be reordered and braces may have to be put once again and this process is time consuming and onerous. To avoid placing the braces on teeth once again, the first sequence of aligners instead of being a regular aligner 702 may be a truncated aligner 704 which is a truncated version of the regular aligner 702, such that a significant portion of the regular aligner 702 is absent. As a result the truncated aligner 704 can be placed on the top of the teeth that have brackets 108 and wires 110, to determine whether the regular aligner is likely to fit the teeth after the brackets 108 and wires 110 have been removed (as shown in block 706). If the truncated aligners 704 do not fit then a new set of aligners is needed.

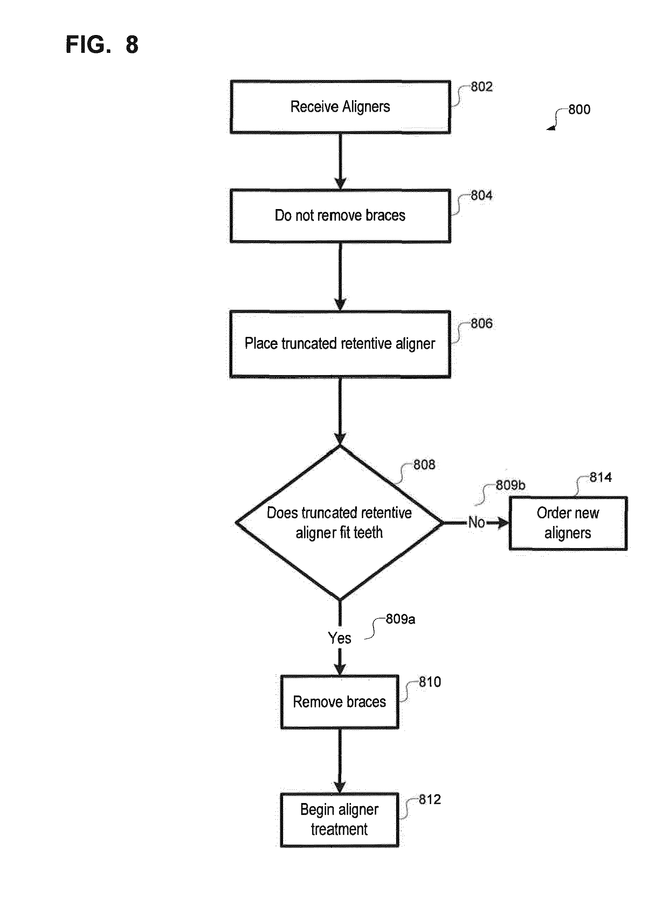

FIG. 8 illustrates a flowchart 800 that shows how truncated aligners are used for determining whether a plurality of aligners are likely to fit a patient's teeth, in accordance with certain embodiments.

Control starts at block 802 in which aligners are received, and on receipt of aligners the braces are not removed (at block 804) and the truncated aligners is placed on the teeth (at block 806). The truncated aligner is a truncated portion of a retentive aligner.

A determination is made (at block 808) as to whether the truncated aligner fits the teeth. If so ("Yes' branch 809a) then the braces are removed (at block 810) and the aligner treatment started (at block 812). If not, ("No" branch 809b) then a new set of aligners are ordered (at block 814).

Therefore, FIG. 7 and 8 illustrate certain embodiments in which truncated aligners are used on teeth with braces, to determine whether regular aligners that have been received are likely to the fit the teeth after braces are removed.

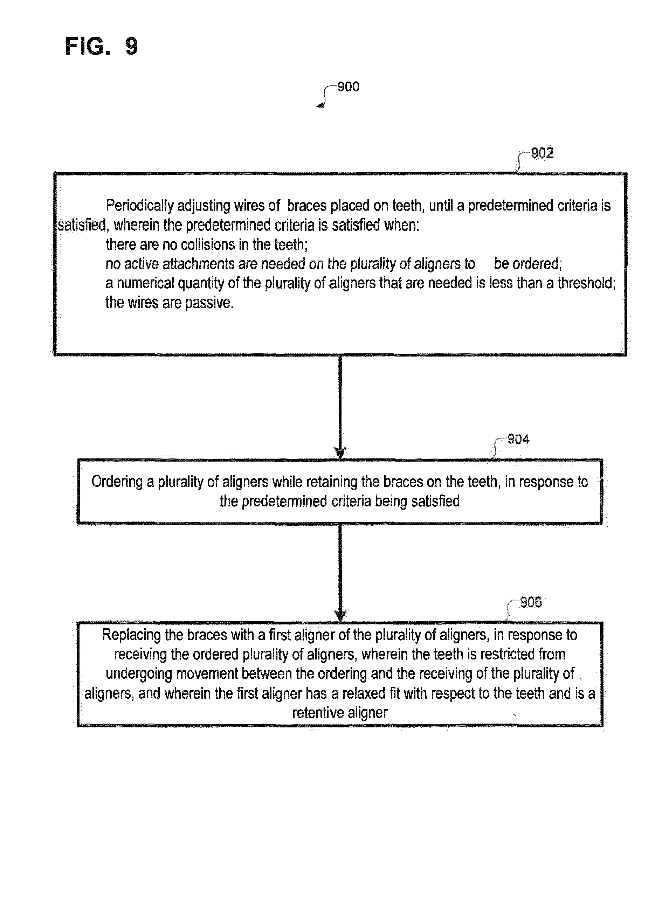

FIG. 9 illustrates a flowchart 900 that shows certain operations, in accordance with certain embodiments. Control starts at block 902, in which wires of braces 102 placed on teeth are periodically adjusted, until a predetermined criteria is satisfied. In certain embodiments, the predetermined criteria is satisfied when: there are no collisions in the teeth; no active attachments are needed on the plurality of aligners to be ordered; a numerical quantity of the plurality of aligners that are needed is less than a threshold; and the wires are passive.

Control proceeds to block 904a, in which a plurality of aligners 104a...104n are ordered while retaining the braces 102 on the teeth, in response to the predetermined criteria being satisfied. Control proceeds to block 904, in which the braces 102 are replaced with a first aligner of the plurality of aligners 104a...104n, in response to receiving the ordered plurality of aligners, wherein the teeth is restricted from undergoing movement between the ordering and the receiving of the plurality of aligners 104a...104n.

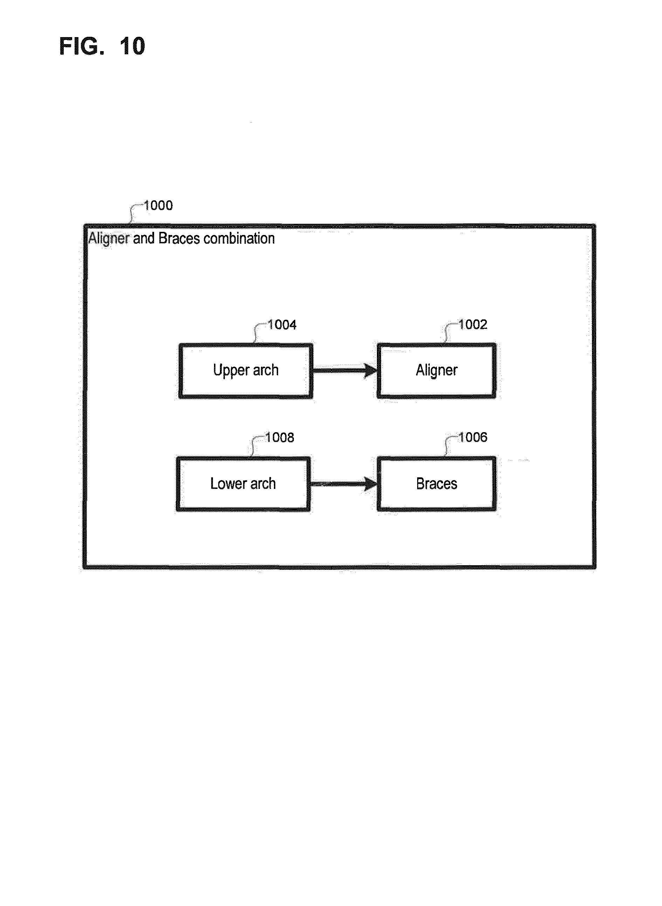

FIG. 10 illustrates a block diagram 1000 that shows how aligners 1002 may be placed on the upper arch 1004 of a patient, and braces 1006 on the lower arch 1008 of the patient, in accordance with certain embodiments. The upper arch 1004 is more visible and the aligners 1002 provide better aesthetics and as a result the aligners 1002 are used on the upper arch. The lower arch 1008 is typically not as visible as the upper arch, and as a result the braces 1006 may suffice aesthetically for many patients for the lower arch 1008.

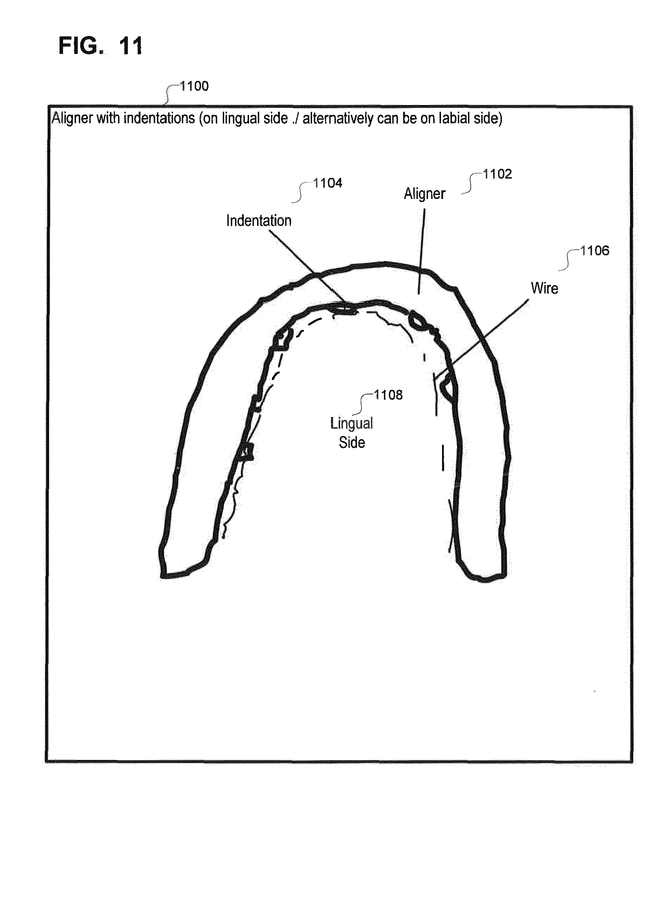

FIG. 11 illustrates a block diagram 1100 that shows an aligner 1102 with indentations 1104 that fits over braces comprising brackets and wires 106 placed on teeth, in accordance with certain embodiments. The brackets and wires may be on the lingual side 1108 as shown in FIG. 11, but in alternative embodiments the brackets and wires may be on the labial side.

By integrating the aligner 1102 with indentations 1104 the modified aligner may be placed over brackets and wires. As a result, both brackets and wires, and aligners may be used to move teeth to a desired position.

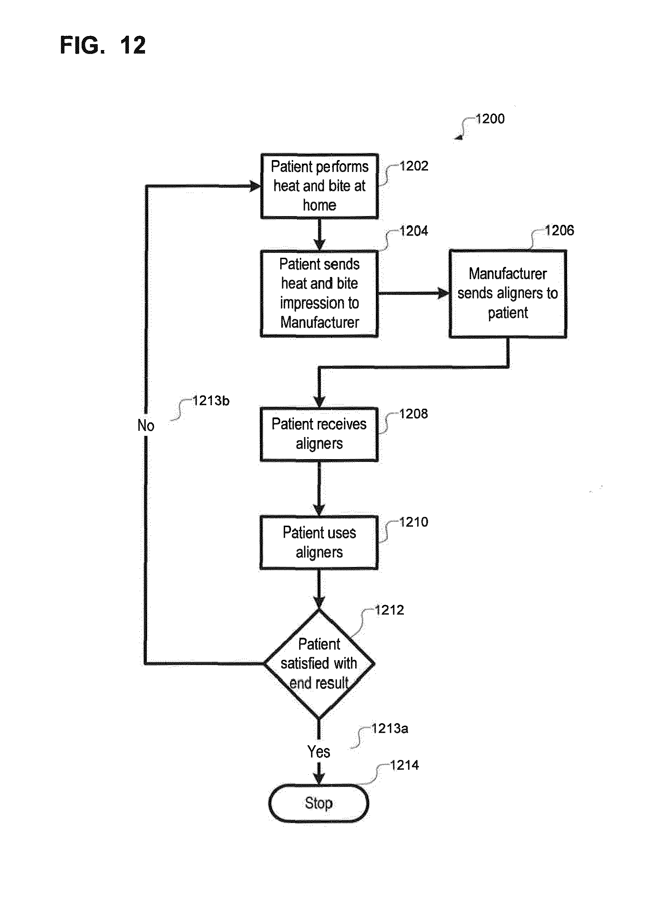

FIG. 12 illustrates a flowchart 1200 that shows how a patient may perform heat and bite operations at home, in accordance with certain embodiments.

Control starts at block 1202 in which a patient performs a heat and bite operation at home, and sends (at block 1204) the heat and bit impression to a manufacturer. The manufacturer send the aligners to the patient (at block 1206) and the patient on receiving (at block 1208) the aligners, uses the aligners (1210) and determines if he is satisfied (at block 1212) with the end result. If so ("Yes branch 1213a) the process stops (at block 1214). If not, ("No" branch 1213b) then the patient performs another heat and bite operations at home. In certain embodiments, performing the heat and bite operation at home may reduce the cost of treatment for the patient.

Therefore, FIGs. 1-12 illustrate certain embodiments in which based on certain predetermined criteria a transition is made from braces to aligners for orthodontic treatment of patients. Additionally relaxed fitting retentive aligners are used bring back teeth to the position at which the aligners were ordered. Truncated aligners may be used over teeth with braces to determine whether regular aligners are likely to fit.

In certain embodiments, aligners with indentations are fitted over lingual or labial braces. In other embodiments, aligners are used on the upper arch and braces on the lower arch.

Certain embodiments provide a method, system, and computer readable storage medium for designing braces 102 and aligners 104a...104n. A computational device 116 uses digital images of teeth to design the braces 102 whose wires 110 are periodically adjusted, until a predetermined criteria 130 is satisfied. Based on additional digital images of the teeth with the braces 102 attached, a plurality of aligners 104a...104n are designed, wherein the braces 102 are replaced with a first aligner 104a of the plurality of aligners 104a...104n, in response to receiving the plurality of aligners 104a...104n, and wherein the teeth is restricted from undergoing movements between ordering and receiving the plurality of aligners 104a...104n.

In many situations, dental practitioners may attempt to treat a patient only to find that the patient's malocclusion is too difficult for aligners to correct. Then the doctors may change the patient to brackets/wire treatment and the proposed embodiments do not exhibit such problems.

There are cases that dental practitioners cannot use aligners on. There are cases with brackets/wires that dental practitioners have a difficult time in finishing. Certain embodiments handle many different types of cases including the scenarios mentioned, and provide an excellent finish. Certain embodiments allow for the best of both appliance types to be used in treatment. It allows the patient to shift to an aligner at the proper time to ensure the best finish. This means the patients may be able to move to a more aesthetic and comfortable treatment method. The treatment process removes the concerns and difficulty of finishing of a bracket/wire appliance.

### Additional Details of Embodiments

Certain operations described in the figures may be implemented as a method, apparatus or computer program product using techniques to produce software, firmware, hardware, or any combination thereof. Additionally, certain embodiments may take the form of a computer program product embodied in one or more computer readable storage medium(s) having computer readable program code embodied therein.

A computer readable storage medium may include an electronic, magnetic, optical, electromagnetic, or semiconductor system, apparatus, or device, or any suitable combination of the foregoing. The computer readable storage medium may also comprise an electrical connection having one or more wires, a portable computer diskette or disk, a hard disk, a random access memory (RAM), a read-only memory (ROM), an erasable programmable read-only memory (EPROM or Flash memory), a portable compact disc read-only memory (CD-ROM), an optical storage device, a magnetic storage device, etc. A computer readable storage medium may be any tangible medium that can contain, or store a program for use by or in connection with an instruction execution system, apparatus, or device.

A computer readable signal medium includes a propagated data signal with computer readable program code embodied therein. A computer readable signal medium may be any computer readable medium that is not a computer readable storage medium and that can communicate, propagate, or transport a program for use by or in connection with an instruction execution system, apparatus, or device. The computer readable storage medium is different from the computer readable signal medium.

Computer program code for carrying out operations for aspects of the present invention may be written in any combination of one or more programming languages.

Features of the present invention are described below with reference to flowchart illustrations and/or block diagrams of methods, system and computer program products according to certain embodiments. At least certain operations that may have been illustrated in the figures show certain events occurring in a certain order. In alternative embodiments, certain operations may be performed in a different order, modified or removed. Additionally, operations may be added to the above described logic and still conform to the described embodiments. Further, operations described herein may occur sequentially or certain operations may be processed in parallel. Yet further, operations may be performed by a single processing unit or by distributed processing units. Computer program instructions can implement the blocks of the flowchart. These computer program instructions may be provided to a processor of a computer for execution.

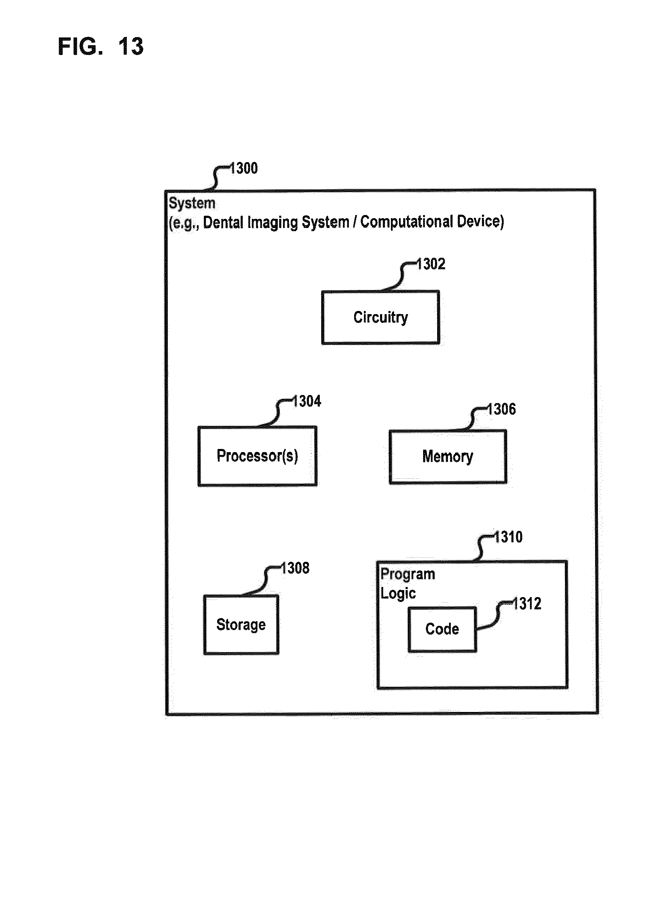

FIG. 13 illustrates a block diagram of a computer system 1300 that is used to design braces and aligners, in accordance with certain embodiments. The system 1300 may include a circuitry 1302 that may in certain embodiments include at least a processor 1304. The processor 1304 may comprise any suitable processor known in the art, such as, an arithmetic logical unit, a central processing unit, a circuitry that perform operations, hardware that performs instructions of a computer program, a microprocessor, a parallel processor, an array processor, a vector processor, a transistorized central processing unit, a microcontroller, a logic circuitry, etc. Any device that manipulates digital information based on one or more operational instructions or in a predefined manner is an example of the processor 1304. The system 1300 may also include a memory 1306 (e.g., a volatile memory device), and storage 1308. The storage 1308 may include a nonvolatile memory device (e.g., EEPROM, ROM, PROM, RAM, DRAM, SRAM, flash, firmware, programmable logic, etc.), magnetic disk drive, optical disk drive, tape drive, etc. The storage 1308 may comprise an internal storage device, an attached storage device and/or a network accessible storage device. The system 1300 may include a program logic 1310 including code 1312 that may be loaded into the memory 1306 and executed by the processor 1304 or circuitry 1302. In certain embodiments, the program logic 1310 including code 1312 may be stored in the storage 1308. In certain other embodiments, the program logic 1310 may be implemented in the circuitry 1302. Therefore, while FIG. 13 shows the program logic 1310 separately from the other elements, the program logic 1310 may be implemented in the memory 1306 and/or the circuitry 1302.

The terms "an embodiment", "embodiment", "embodiments", "the embodiment", "the embodiments", "one or more embodiments", "some embodiments", and "one embodiment" mean "one or more (but not all) embodiments of the present invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise.

Devices that are in communication with each other need not be in continuous communication with each other, unless expressly specified otherwise. In addition, devices that are in communication with each other may communicate directly or indirectly through one or more intermediaries.

A description of an embodiment with several components in communication with each other does not imply that all such components are required. On the contrary a variety of optional components are described to illustrate the wide variety of possible embodiments.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features.

The foregoing description of various embodiments of the invention has been presented for the purposes of illustration and description. It is not intended to be exhaustive or to limit the invention to the precise form disclosed. Many modifications and variations are possible in light of the above teaching.

Embodiments of the invention can be described with reference to the following numbered clauses, with preferred features laid out in the dependent clauses:
1. A method, comprising:
   retaining braces placed on teeth, until a predetermined criteria is satisfied; ordering a plurality of aligners while retaining the braces on the teeth, in response to the predetermined criteria being satisfied; and
   replacing the braces with a first aligner of the plurality of aligners.
2. The method of clause 1, wherein the predetermined criteria is satisfied when there are no collisions in the teeth.
3. The method of clause 1, wherein the predetermined criteria is satisfied when no active attachments are needed on the plurality of aligners to be ordered.
4. The method of clause 1, wherein the predetermined criteria is satisfied when a numerical quantity of the plurality of aligners that are needed is less than a threshold.
5. The method of clause 1, wherein the predetermined criteria is satisfied when wires are reasonably passive.
6. The method of clause 1, wherein the predetermined criteria is satisfied when:
   there are no collisions in the teeth;
   no active attachments are needed on the plurality of aligners to be ordered;
   a numerical quantity of the plurality of aligners that are needed is less than a threshold; and
   wires are reasonably passive.
7. The method of clause 1, wherein at least the first aligner has a relaxed fit with respect to the teeth and is a retentive aligner, and wherein movement of the teeth is restricted via the braces, between the ordering and receiving of the plurality of aligners.
8. The method of clause 7, wherein the retentive aligner is fabricated from a material that is more flexible in comparison to programmed aligners of the plurality of aligners.
9. The method of clause 7, wherein the retentive aligner is fabricated from a material that is thinner in comparison to programmed aligners of the plurality of aligners.
10. The method of clause 1, wherein to determine whether the predetermined criteria is satisfied one or more of a heat and bite operation and a scanning operation is performed.
11. The method of clause 1, wherein the plurality of aligners include one or more retentive aligners with different amounts fit with respect to the teeth, and wherein a retentive aligner that fits the teeth most tightly is placed on the teeth to bring the teeth back to a position and orientation at which the plurality of aligners were ordered.
12. The method of clause 1, wherein prior to replacing the braces with the first aligner, a truncated aligner is fitted to the teeth with the braces not removed from the teeth, to determine whether the first aligner can be fitted to the teeth after removal of the braces.
13. The method of clause 1, wherein the braces are lingual braces.
14. The method of clause 1, wherein the braces are replaced with the first aligner in an upper arch.
15. The method of clause 1, wherein the braces are replaced with one aligner in an upper arch and at least another aligner in a lower arch.
16. A method of manufacturing a plurality of aligners for a patient, wherein the patient has already been treated with braces placed on teeth, the method of manufacturing comprising:
   receiving an order for the plurality of aligners, wherein the order for the plurality of aligners is received while retaining the braces placed on the teeth, and wherein the order is received after a predetermined criteria is satisfied; and
   in response to receiving the order, manufacturing the plurality of aligners, wherein the braces are replaced with a first aligner of the plurality of aligners.
17. The method for manufacturing the plurality of aligners of clause 16, wherein the predetermined criteria is satisfied when there are no collisions in the teeth.
18. The method for manufacturing the plurality of aligners of clause 16, wherein the predetermined criteria is satisfied when no active attachments are needed on the plurality of aligners to be ordered.
19. The method for manufacturing the plurality of aligners of clause 16, wherein the predetermined criteria is satisfied when a numerical quantity of the plurality of aligners that are needed is less than a threshold.
20. The method for manufacturing the plurality of aligners of clause 16, wherein the predetermined criteria is satisfied when wires are reasonably passive.
21. The method for manufacturing the plurality of aligners of clause 16, wherein at least the first aligner has a relaxed fit with respect to the teeth and is a retentive aligner, and wherein movement of the teeth is restricted via the braces, between the ordering and receiving of the plurality of aligners.
22. The method for manufacturing the plurality of aligners of clause 21, wherein the retentive aligner is fabricated from a material that is more flexible in comparison to programmed aligners of the plurality of aligners.
23. The method for manufacturing the plurality of aligners of clause 21, wherein the retentive aligner is fabricated from a material that is thinner in comparison to programmed aligners of the plurality of aligners.
24. The method for manufacturing the plurality of aligners of clause 16, wherein the plurality of aligners include one or more retentive aligners with different amounts fit with respect to the teeth, and wherein a retentive aligner that fits the teeth most tightly is placed on the teeth to bring the teeth back to a position and orientation at which the plurality of aligners were ordered.
25. A system, comprising:
   brackets and wires placed on teeth; and
   an aligner with indentations placed on the teeth, wherein the brackets and wires fit into the indentations.
26. The system of clause 25, wherein:
   the wires are configured to move the teeth via adjustments; and
   the aligner is configured to move the teeth, wherein movement of the teeth obtained by adjustment of the wires is greater than the movement of the teeth achieved by a sequence of aligners.
27. A method, comprising:
   placing brackets and wires on teeth; and
   placing an aligner with indentations on the teeth, wherein the brackets and wires fit into the indentations.
28. The method of clause 27, the method further comprising:
   adjusting the wires to move the teeth, wherein the aligner is also configured to move the teeth, wherein movement of the teeth obtained by adjustment of the wires is greater than the movement of the teeth achieved by a sequence of aligners.
29. A method, comprising:
   placing an aligner on an upper dental arch of a patient; and
   placing braces on a lower dental arch of the patient, wherein the aligner and the braces are used to adjust position and orientation of teeth included in the upper dental arch and the lower dental arch of the patient.
30. A method for designing braces and a plurality of aligners, the method comprising:
   using, by a computational device, digital images of teeth to design the braces, wherein the braces are retained until a predetermined criteria is satisfied; and
   based on additional digital images of the teeth, designing the plurality of aligners, wherein the braces are replaced with a first aligner of the plurality of aligners.
31. A system for designing braces and a plurality of aligners, the system comprising:
   a memory; and
   a processor coupled to the memory, wherein the processor is configured to perform operations, the operations comprising:
      using digital images of teeth to design the braces, wherein the braces are retained until a predetermined criteria is satisfied; and
      based on additional digital images of the teeth, designing the plurality of aligners, wherein the braces are replaced with a first aligner of the plurality of aligners.
32. A computer readable storage medium for designing braces and a plurality of aligners, wherein code stored in the computer readable storage medium when executed by a processor performs operations, the operations comprising:
   using digital images of teeth to design the braces, wherein the braces are retained until a predetermined criteria is satisfied; and
   based on additional digital images of the teeth, designing the plurality of aligners, wherein the braces are replaced with a first aligner of the plurality of aligners.
33. A plurality of aligners for teeth, the plurality of aligners comprising:
   a first aligner that has a relaxed fit with respect to the teeth and is a retentive aligner; and
   programmed aligners that are different from the first aligner.
34. The plurality of aligners of clause 33, wherein the retentive aligner is fabricated from a material that is more flexible in comparison to the programmed aligners of the plurality of aligners.
35. The plurality of aligners of clause 33, wherein the retentive aligner is fabricated from a material that is thinner in comparison to the programmed aligners of the plurality of aligners.

## Claims

1. A method of manufacturing a plurality of aligners for a patient, wherein the patient has already been treated with braces placed on teeth, the method of manufacturing comprising:
receiving an order for the plurality of aligners, wherein the order for the plurality of aligners is received while retaining the braces placed on the teeth, and wherein the order is received after a predetermined criteria is satisfied; and
in response to receiving the order, manufacturing the plurality of aligners, wherein the braces are replaced with a first aligner of the plurality of aligners.

2. The method for manufacturing the plurality of aligners of claim 1, wherein the predetermined criteria is satisfied when there are no collisions in the teeth.

3. The method for manufacturing the plurality of aligners of either claim 1 or claim 2, wherein the predetermined criteria is satisfied when no active attachments are needed on the plurality of aligners to be ordered.

4. The method for manufacturing the plurality of aligners of any preceding claim, wherein the predetermined criteria is satisfied when a numerical quantity of the plurality of aligners that are needed is less than a threshold.

5. The method for manufacturing the plurality of aligners of any preceding claim, wherein the predetermined criteria is satisfied when wires are reasonably passive.

6. The method for manufacturing the plurality of aligners of any preceding claim, wherein at least the first aligner has a relaxed fit with respect to the teeth and is a retentive aligner, and wherein movement of the teeth is restricted via the braces, between the ordering and receiving of the plurality of aligners.

7. The method for manufacturing the plurality of aligners of claim 6, wherein the retentive aligner is fabricated from a material that is more flexible in comparison to programmed aligners of the plurality of aligners and/or wherein the retentive aligner is fabricated from a material that is thinner in comparison to programmed aligners of the plurality of aligners.

8. The method for manufacturing the plurality of aligners of any preceding claim, wherein the plurality of aligners include one or more retentive aligners with different amounts of fit with respect to the teeth, and wherein a retentive aligner that fits the teeth most tightly is placed on the teeth to bring the teeth back to a position and orientation at which the plurality of aligners were ordered.

9. A system, comprising:
brackets and wires placed on teeth; and
an aligner with indentations placed on the teeth, wherein the brackets and wires fit into the indentations.

10. The system of claim 9, wherein:
the wires are configured to move the teeth via adjustments; and
the aligner is configured to move the teeth, wherein movement of the teeth obtained by adjustment of the wires is greater than the movement of the teeth achieved by a sequence of aligners.

11. A method for designing braces and a plurality of aligners, the method comprising:
using, by a computational device, digital images of teeth to design the braces, wherein the braces are retained until a predetermined criteria is satisfied; and
based on additional digital images of the teeth, designing the plurality of aligners, wherein the braces are replaced with a first aligner of the plurality of aligners.

12. A system for designing braces and a plurality of aligners, the system comprising:
a memory; and
a processor coupled to the memory, wherein the processor is configured to perform operations, the operations comprising:
using digital images of teeth to design the braces, wherein the braces are retained until a predetermined criteria is satisfied; and
based on additional digital images of the teeth, designing the plurality of aligners, wherein the braces are replaced with a first aligner of the plurality of aligners.

13. A computer readable storage medium for designing braces and a plurality of aligners, wherein code stored in the computer readable storage medium when executed by a processor performs operations, the operations comprising:
using digital images of teeth to design the braces, wherein the braces are retained until a predetermined criteria is satisfied; and
based on additional digital images of the teeth, designing the plurality of aligners, wherein the braces are replaced with a first aligner of the plurality of aligners.

14. A plurality of aligners for teeth, the plurality of aligners comprising:
a first aligner that has a relaxed fit with respect to the teeth and is a retentive aligner; and
programmed aligners that are different from the first aligner.

15. The plurality of aligners of claim 14, wherein the retentive aligner is fabricated from a material that is more flexible in comparison to the programmed aligners of the plurality of aligners and/or wherein the retentive aligner is fabricated from a material that is thinner in comparison to the programmed aligners of the plurality of aligners.
